# EUROPEAN PATENT SPECIFICATION

(11) **EP 1 400 888 B1**
(45) Date of publication and mention of the grant of the patent: **11.06.2008**
(21) Application number: 03255267.1
(22) Date of filing: 26.08.2003
(51) Int. Cl.: G06F 1/00

(54) **Multi-function peripheral**
Multifunktions -Peripheriegerät
Dispositif multifonctionel péripherique

(30) Priority: 23.09.2002 US 253203
(43) Date of publication of application: 24.03.2004
(73) Proprietor: Ricoh Company, Ltd., Tokyo 143-8555 (JP)
(72) Inventor: Katano, Seiichi, San Jose, CA 95131-1817 (US)
(74) Representative: Leeming, John Gerard

(56) References cited:
- WO-A-01/40907
- US-A- 4 819 162
- US-A- 5 366 404
- US-A1- 2001 017 700
- US-A1- 2002 046 247
- ANONYMOUS: "CANON U.S.A. AND eCopy, Inc. ANNOUNCE imageRUNNER 5000 AND ScanStation INTEGRATION" INTERNET, 1 May 2001 (2001-05-01), XP002258942 Retrieved from the Internet: <URL:http://web.archive.org/web/2001060409 1806/www.ecopy.com/news/05_01_20 01.htm> [retrieved on 2003-10-22]
- ECOPY: "The eCopy Solution" INTERNET, [Online] 2002, XP002268497 Retrieved from the Internet: <URL:www.usa.canon.com/cpr/pdf/White%20Pap ers...ite%20Paper.pdf > [retrieved on 2004-01-29]

## Description

The present invention relates to the field of multi-function peripheral and more specifically, to a mufti-function peripheral with time entry and message features.

A Multi-Function Peripheral (MFP) is a single device that performs two or more functions. Many MFPs are equipped to perform as printers, scanners, facsimile machines, and copiers. Because they can perform many functions, they are advantageous over their single function counterparts. Moreover, consumers prefer MFPs because purchasing one is often less expensive than separately purchasing a printer, scanner, facsimile machine, and copier. Because of their usefulness and versatility, MFPs are very common in the workplace.
In fact, many companies use MFPs as part of their day-to-day operation. For example, businesses may use the MFPs to print up a report, make copies of the report, send the report to someone else, or even scan a picture to put in the report. From a business stand point, an MFP is valuable because it saves the company money and allows their employees to be more efficient and productive
There are various MFPs on the market, but most are limited to the above functions. Some MFPs will combine the functionalities of a printer and copier, others may combine the functionalities of a printer and facsimile machine, while others may even combine the functionalities of a printer, facsimile machine, copier and scanner. Despite their functionalities, most MFPs have not implemented the functionality of other devices that may be commonly found in a company.
For instance, many companies employ hourly employees who are required to maintain a log of hours they work. Sometimes, the company may ask the employees to maintain a timesheet and submit it at the end of the pay period. Most often, however, companies will ask employees to clock in and clock out at a time clock terminal. There are various types of time clock terminals. One type allows an employee to insert a paper timesheet into the time clock terminal. The time clock terminal then records a time entry on the paper timesheet. This provides assurance that the timesheet accurately reflects the time that the employee arrives and leaves work. One drawback to this approach is that the company must manually compute the hours worked by the employee by calculating the difference between the clock in time and the clock out time. This can require a significant amount of human resources, especially when the company employs many employees.
More sophisticated time clock terminals store time entries electronically instead of recording them on a paper timesheet. This allows the number of hours worked by an employee to be determined automatically. Another advantage of storing the time entry electronically is that it is more difficult for employees to alter their time entries. Despite the advantages that current time clock terminals may provide to companies, one major disadvantage is that companies have to purchase a separate time clock terminal system, which can be expensive.
In view of the foregoing, there is a need for an MFP that provides additional functionality. There is a particular need for an MFP that includes the functions of a time card terminal.

US2001/0017700 discloses a multi-function printer in which users must identify themselves to use the printer and usage records are kept.
WO 01/40907 discloses a system and method for managing storage and distribution of money tills in which records are kept of times tills are checked in and out and in which messages can be printed.
According to one aspect of the invention, there is provided a multi-function peripheral apparatus as defined in appended claim 1. Other embodiments are defined in the dependent claims.
The user identification may include a user ID and a password and the MFP may be configured to verify the user ID and password either locally or via a remote server. The MFP may receive the user identification data, for example, from an identification card read by a card reader or other device. The MFP may be further configured to provide message data or employee date to the user. The MFP may be, for example, a printer or copier.
The multi-function peripheral apparatus of the invention may be a printer or a copier, that is a printer or copier that also performs the user identification and time recordal functions of the invention in addition to the usual printer or copier functions.
The present invention also provides a computer program as defined in appended claim 14.

The present invention is illustrated by way of example, and not by way of limitation, in the following description and the figures of the accompanying drawings and in which like reference numerals refer to similar elements and in which:
FIG.1 is a block diagram that depicts a Multi-Function Peripheral (MFP).
FIG. 2 is a flow diagram depicting the operation of an MFP as it is performing various possible functions with an employee.
FIG. 3 is a block diagram of a login screen with a keypad on an MFP.
FIG. 4 is a block diagram of a user screen with a keypad on an MFP.

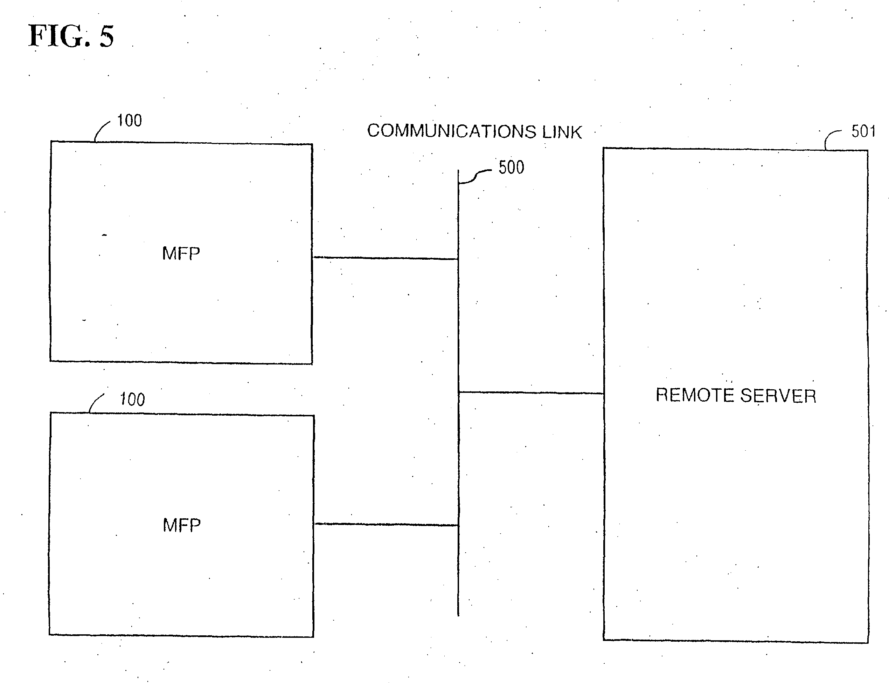

FIG. 5 is a block diagram that depicts two MFPs communicatively coupled to a remote server via a communications link.
FIG.6 is a block diagram that depicts a remote server upon which an embodiment of the invention may be implemented.
FIG. 7 is a flow diagram depicting the operation of an MFP coupled to a remote server by way of a communications link, as it is performing various possible functions With an employee
FIG.8 is a block diagram that depicts an MFP coupled to a payroll server and a management server by way of a communications link.
FIG. 9 is a flow diagram depicting the operation of an MFP coupled to a remote server by way of a communications link, as it is performing various possible functions with an employee.
FIG. 10 is a block diagram that depicts a special user screen with a keypad on an MFP.
FIG. 11 is a block diagram that depicts an update screen with a keypad on an MFP.

A method and apparatus for Multi-Function Peripheral with Input and Output Terminal is described. In the following description, for the purposes of explanation, numerous specific derails are set forth in order to provide a thorough understanding of the present invention. It will be apparent, however, that the present invention may be practiced without these specific details. In other instances, well-known structures and devices are shown in block diagram form in order to avoid unnecessarily obscuring the present invention. Various aspects and embodiments of the invention are described in the following sections: (I) Overview; (II) Stand Alone Multi-Function Peripheral; (III) Network Applications; and (TV) Other Applications.

### I. Overview

A Multi-Function Peripheral (MFP) is configured to both receive user identification data that uniquely identifies a user and to generate time record data for the user. The user identification data may be any type of data that uniquely identifies the user, such as a user ID and password. The user identification data may be verified by the MFP or verified by another entity, such as a remote server. The time record data may include, for example, a time at which the user identification data was received. The time record data may be generated in response to the user identification data being received. Alternatively, the time record data may be generated in response to other criteria being satisfied. For example, the time record data may be generated in response to receiving user input to the MFP.

The MFP configured in the manner described may be used in a variety of applications, such as employee time clock applications. The MFP may be further configured to provide information for the user, such as messages and schedule information, on a Graphical User Interface (GUI)

### II. Stand Alone Multi-Function Peripheral

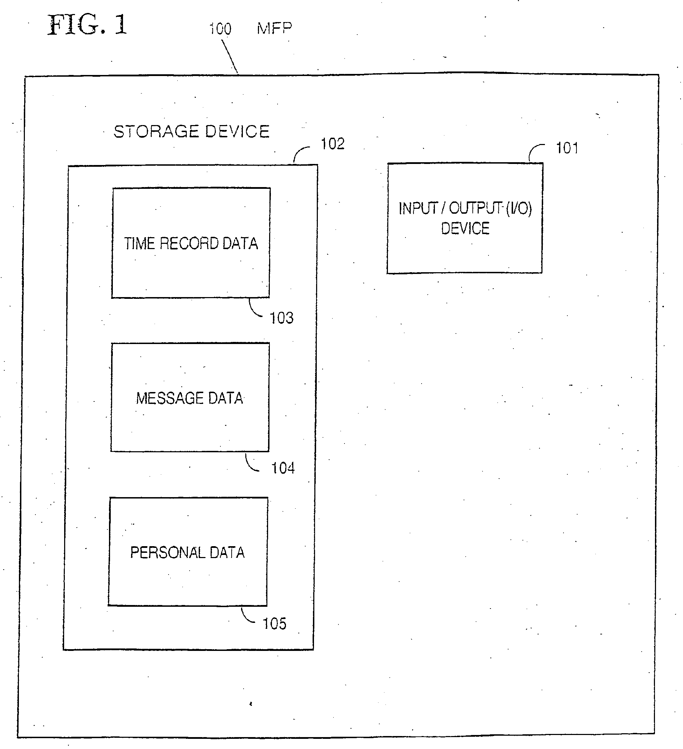

FIG. 1 is a block diagram that depicts an MFP 100 configured according to an embodiment of the invention MFP 100 includes an input/output device 101 for receiving input from a user and displaying output to a user. Input/output device 101 may be implemented by any mechanism that provides for the exchange of information, between a user and MFP 100 and the invention is not limited to any particular type of mechanism. Input/output device 101 may include a GUI for receiving input from a user and displaying output to a user.
MFP 100 also includes a storage device 102 for storing data. The data may include, for example, time record data 103, message data 104, and personal data 105 (hereinafter collectively referred to as "local data"). However, the data may include other types of data, or any combination thereof. Storage device 102 may be disposed internal or external to MFP, depending upon the requirements of a particular application.
MFP 100 may include other elements that are not depicted or described herein for purposes of brevity. For example, MFP 100 may include elements for performing printing, scanning, facsimile and copying functions.

### (a) MFP Login

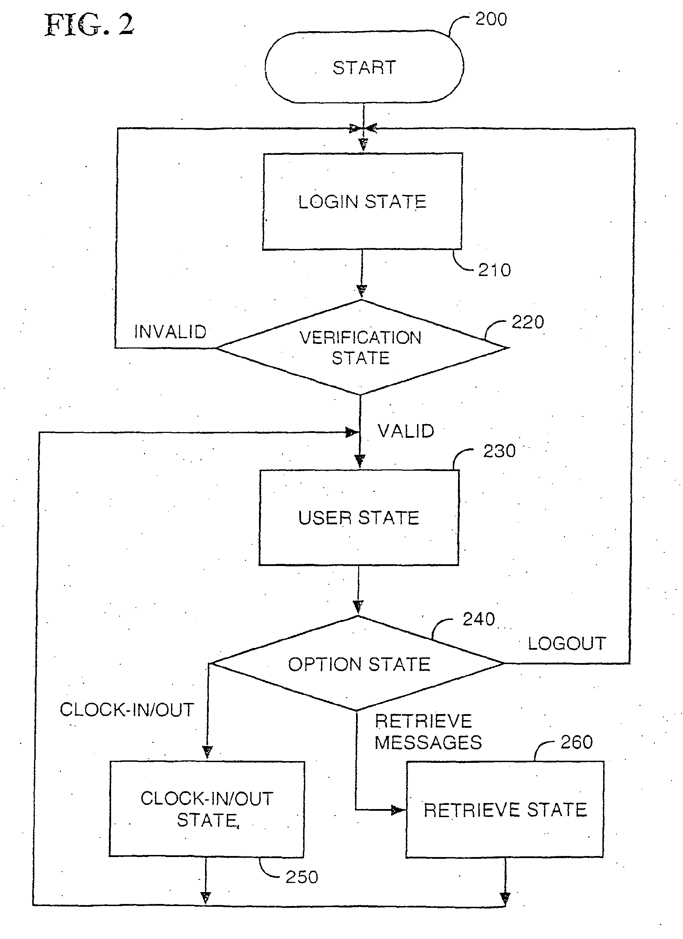

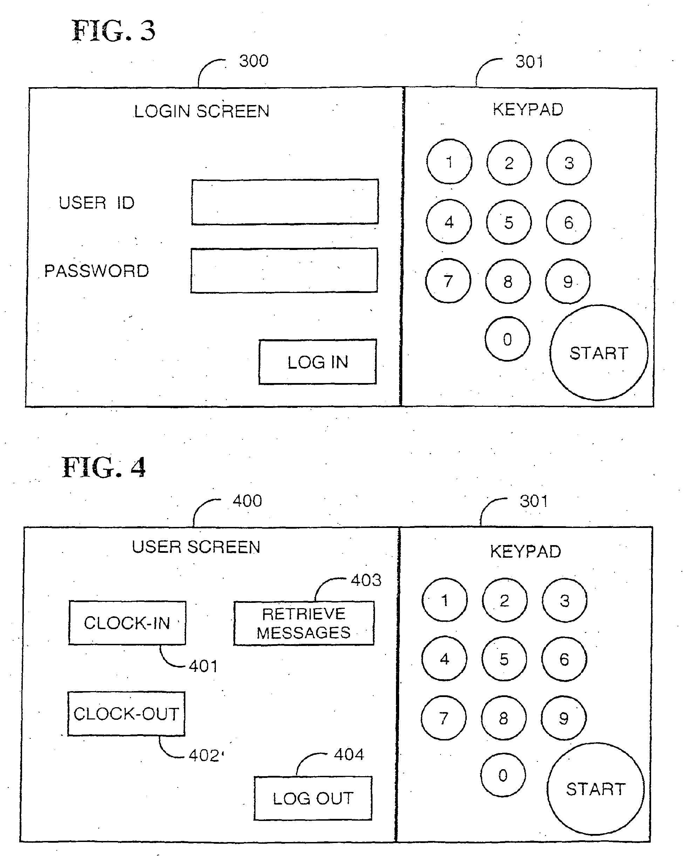

FIG. 2 is a flow diagram depicting the operation of an MFP 100 in the context of performing various possible functions with a user. From a start state 200, MFP 100 proceeds to a login slate 210, where MFP 100 displays a login screen 300 (FIG.3) on input/output device 101. Login screen 300 allows a user to login to MFP 100 by providing valid user identification data. In the present example, the user identification data includes a user ID and a password. The user may provide the user identification data to MFP 100 using a variety of mechanisms depending upon the requirements of a particular application. In the present example, the user enters a user ID and password via a keypad 301. Keypad 301 may be a manual keypad disposed on input/output device 101, or alternatively may be a virtual keypad displayed adjacent to login screen 300 on a GUI. Furthermore, although keypad 301 is depicted in FIG.3 as numeric, keypad 301 may be alphanumeric.
After receiving the user identification data in the form of a user ID and password, MFP 100 proceeds to a verification state 220. In verification state 220, MFP 100 verifies the user identification data received from the user. In the present example, MFP 100 verifies the user ID and password received from the user. According to one embodiment of the invention, MFP 100 compares the user ID and password received from the user to valid user IDs and passwords stored on storage device 102. The valid user IDs and passwords may be stored in personal data 105.
If in verification state 220, a determination is made that the user ID and password provided by the user are not valid, then the user is not permitted to log onto MFP 100. In this situation, MFP 100 returns to login state 210 where a new user ID and password may be received from the user. If in verification state 220, a determination is made that the user ID and password provided by the user are valid, then MFP 100 proceeds to a user state 230. In user state 230, MFP 100 displays a user screen 400 (FIG.4) on input/output device 101. According to one embodiment of the invention, user screen 400 includes various options that may be selected by the user. These options include clock-in, clock-out, rec-ieve messages and logout. MFP 100 then proceeds to an option state 240, where the MFP 100 waits for the user to select an option. The aforementioned options are described in more detail hereinafter.

### (b) Clock-In/Clock-Out

A user selects the clock-in option by selecting a user interface object 401 on user screen 400 associated with the clock-in option.MFP 100 proceeds to a clock-in/out state 250 and generates time record data associated with the event. For example, the time record data may specify a time at which the user selected user interface object 401, which corresponds to the time at which the user clocked-in. According to one embodiment of the invention, MFP 100 stores the time record data in time record data 103, located in the storage device 102. After storing the time record data, MFP 100 returns to user state 230, displays user screen 400, and then proceeds to option state 240, where the MFP 100 waits for the user to choose another option.
A user selects the clock-out option by selecting a user interface object 402 associated with the clock-out option. MFP 100 proceeds to clock-in/out state 250 and generates additional time record data associated with the event. For example, the additional time record data may specify a time at which the user selected user interface object 402, which corresponds to the time at which the user clocked-out. MFP 100 may also store the additional time record data in time record data 103, located in the storage device 102. MFP 100 then returns to user state 230, displays the user screen 400, and proceeds to option state 240, where the MFP 100 waits for the user to choose another option.
In this embodiment of the invention, user screen 400 includes separate user interface objects 401, 402 corresponding to the clock-in and clock-out options, respectively. However, a single user interface object may be used for both the clock-in and ciock-out options.

### (c) Retrieve Messages

A user selects the retrieve messages option by selecting a user interface object 403 associated with the retrieve messages option. MFP 100 proceeds to a retrieve messages state 260. In retrieve messages state 260, MFP 100 retrieves from the storage device 102, messages associated with the user currently logged on to MFP 100. The messages may be stored in message data 104. If there is at least one message within the message data 104 associated with the employee, men the MFP 100 retrieves those messages and displays them on input/output device 101. Once the user has finished reading the messages, MFP 100 returns to user state 230, displays the user screen 400, and proceeds to option state 240, where the MFP 100 waits for the user to choose another option.

### (d) MFP Logout

A user selects the logout option by selecting a user interface object 404 associated with the logout option. MFP 100 proceeds to login state 210.
In FIG. 2, the invention has been described with reference to specific embodiments thereof. It will, however, be evident that various modifications and changes may be made thereto without departing from the scope of the invention. For example, the steps may be performed in a different order than depicted in FIG. 2. Another example, some of the steps may not be performed, or additional steps may be performed. The flow chart is, accordingly, to be regarded in an illustrative rather than a restrictive sense.

### III. Network Applications

FIG is a block diagram that depicts two MFPs 100 communicatively coupled to a remote server 501 via a communications link 500. Communications link 500 may be implemented by any medium or mechanism that provides for the exchange of data between MFPs 100 and remote server 501. Examples of communications link 500 include, without limitation, a network such as a Local Area Network (LAN), Wide Area Network (WAN), Ethernet or the Internet, or one or more terrestrial, satellite or wireless links.

### (a) Remote Server

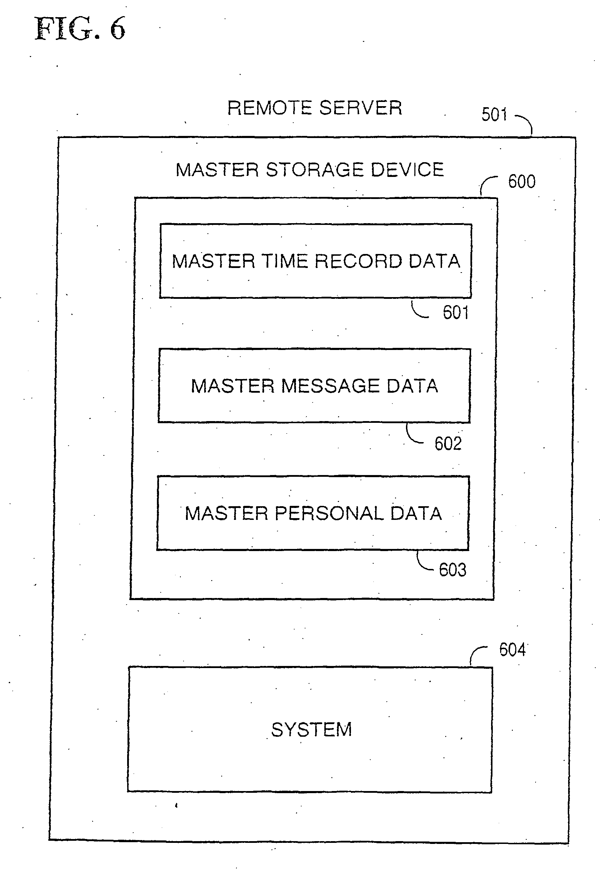

FIG.6 is a block diagram that depicts an example embodiment of remote server 501. Remote server 501 includes a master storage device 600 for storing data. Example data includes master time record data 601, master message data 602, and master personal data 603 (hereinafter collectively referred to as "master data"). Storing the master data in remote server 501 allows data to be stored in a central location, which is advantageous in multiple MFP applications. Remote server 501 further includes a system 604 for processing, communicating or executing data.

### (i) MFP Login

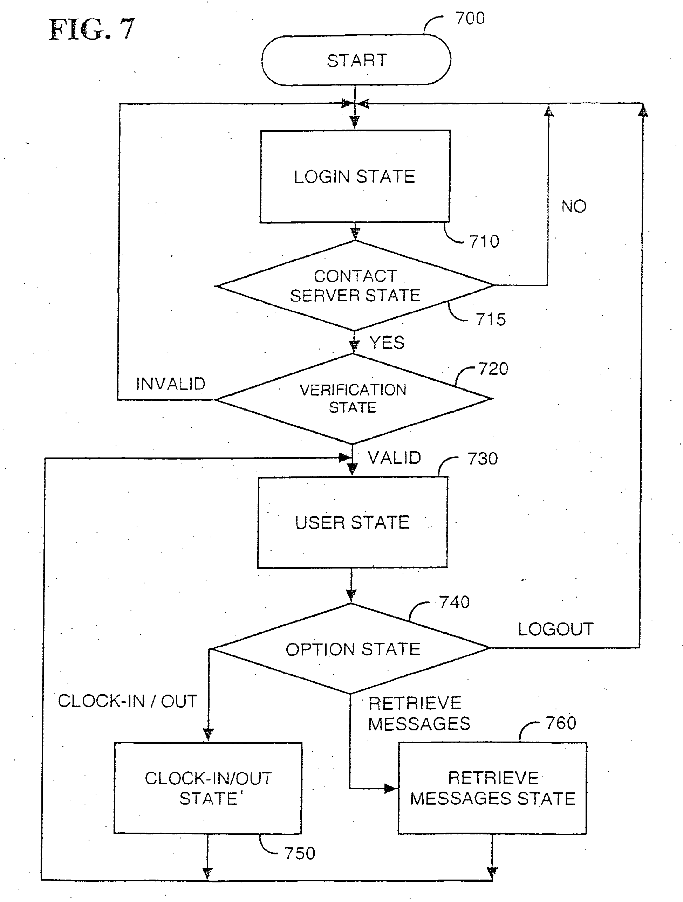

FIG. 7 is a flow diagram depicting the operation of an MFP 100 coupled to remote server 501 via communications link 500, as it is performing various functions with a user. From a start state 700, MFP 100 proceeds to a login state 710, where MFP 100 displays login screen 300 on input/output device 101. MFP 100 then waits for user identification data, in the form of a user ID and password, to be entered. Upon receipt of the user ID and password, MFP 100 proceeds to a contact server state 715.
In contact server state 715, MFP 100 determines whether remote server 501 is available. This may be accomplished using a variety of techniques, depending upon the requirements of a particular application. For example, MFP 100 may contact a network manager or send a status request directly to remote server 501. If MFP 100 determines that remote server 501 is available, then MFP 100 proceeds to a verification state 720.
In verification state 720, MFP 100 provides the user ID and password to remote server 501 for verification. Remote server 501 may use any type of technique for verifying the user ID and password and the invention is not limited to any particular approach According to one embodiment of the invention, remote server 501 compares the user ID and password against known valid user ID and password combinations stored in master storage device 600, for example in master personal data 603. Remote server 501 provides a response to MFP 100 indicating whether the user ID and password provided by MFP 100 were successfully verified.
If remote server 501 determines that the user ID and password are not valid, then MFP 100 responds to the employee entry by returning to the login state 710 and displaying the login screen 300. If remote server 501 determines that the user ID and password are valid, then MFP 100 proceeds to a user state 730, where the MFP 100 displays user screen 400 on input/output device 101. The user is now logged onto MFP 100. MFP 100 then proceeds to an option state 740, where MFP 100 waits for the user to select a desired option.
In some instances, it may be possible for remote server 501 or system 604 to be unavailable because communications link 500 is down, or system 604 is busy processing other applications for other MFPs. In this situation, MFP 100 is unable to perform remote verification of user identification data using remote server 501 and may proceed to attempt local verification in stand-alone mode as described herein.
Once the user has successfully logged onto MFP 100 coupled to a remote server 501, the user has essentially the same options as those that are available on a stand alone MFP 100. These options include clock-in, clock-out, retrieve messages and logout. The aforementioned options are described in more detail hereinafter.

### (ii) Clock-In / Clock-Out

From option state 740, a user selects the clock-in option by selecting a user interface object 401 on user screen 400 associated with the clock-in option. MFP 100 proceeds to a clock-in/out state 750 and generates time record data associated with the event. For example, the time record data may specify a time at which the user selected user interface 401, which corresponds to the time at which the user clocked-in. According to one embodiment of the invention, MFP 100 stores the time record data in master time record data 601, located in the master storage device 600. Additionally, MFP 100 may also store the time record data in time record data 103, located in the storage device 102. After the storing of the time record data, MFP 100 returns to user State 730, displays user screen 400, and then proceeds to option state 740, where MFP 100 waits for the user to choose another option.
A user may select the clock-out option by selecting a user interface object 402 associated with the clock-out option. MFP 100 proceeds to clock-in/out state 750 and generates additional time record data associated with the event. For example, the additional time record data may specify a time at which the user selected user interface object 402, which corresponds to the time at which the user clocked-out. MFP 100 may also store the additional time record data in time record data 601, located in the master storage device 600. Additionally, MFP 100 may also store the time record data in time record 103, located in the storage device 102. MFP 100 then returns to user state 730, displays the user screen 400, and proceeds to option state 740, where the MFP 100 waits for the user to choose another option.

### (iii) Retrieve Messages

A user selects the retrieve messages option by selecting a user interface object 403 associated with the retrieve messages option. MFP 100 proceeds to a retrieve messages state 760. In retrieve messages state 760, MFP 100 retrieves from the master storage device 600, messages associated with the user currently logged on to MFP100. The messages may be stored in master message data 602. If there is at least one message within the message data 602 associated with the employee, then the MFP 100 retrieves those messages and displays them on input/output device 101. Once the user has finished reading the messages, MFP 100 returns to user state 730, displays the user screen 400, and proceeds to option state 740, where the MFP 100 waits for the user to choose another option.

### (iv) MFP Logout

A user selects the logout option by selecting a user interface object 404 associated with the logout option. The user is logged out and MFP 1 00 proceeds to login state 710.
In FIG. 7, the invention has been described with reference to specific embodiments thereof. It will, however, be evident that various modifications and changes may be made thereto without departing from the scope of the invention. For example, the steps may be performed in a different order than depicted in FIG. 7. Another example, some of the steps may not be performed, or additional steps may be performed. The flow chart is, accordingly, to be regarded in an illustrative rather than a restrictive sense.

### (b) Multiple Remote Servers

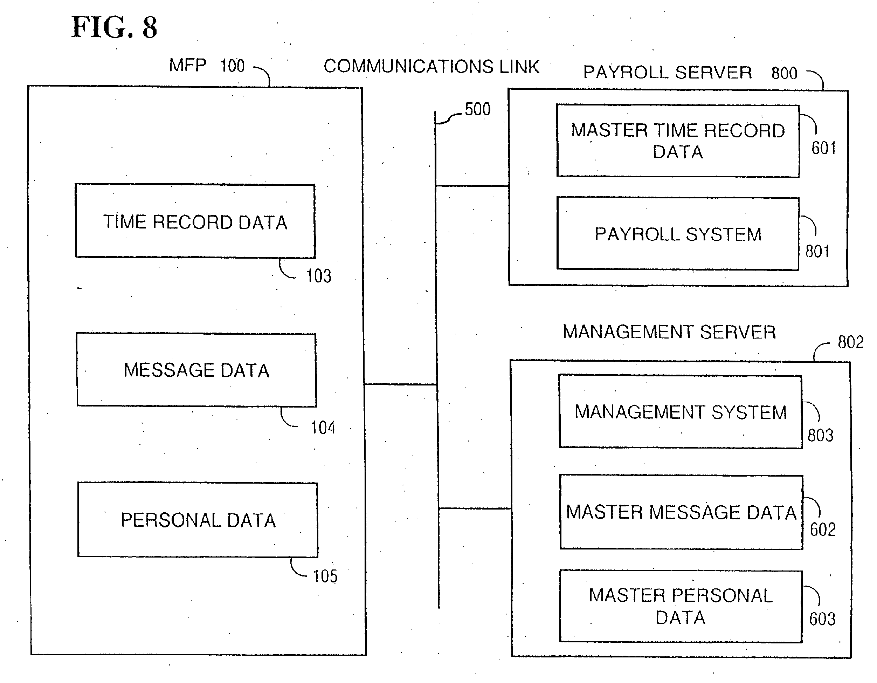

According to another embodiment of the invention, the master data is stored on multiple remote servers to be accessed by MFPs 100. FIG. 8 is a block diagram that depicts such an arrangement. In FIG. 8, MFP 100 is communicatively coupled via communications link 500 to a payroll server 800 that stores master time record data 601 comprising clock-in and clock-out time entries. Payroll server 800 also includes a payroll system for 801 for processing, communicating, or executing data. MFP 100 is also communicatively coupled via communications link 500 to a management server 802. Management server 802 includes a management system 803 for processing, communicating, or executing data. Management server 802 also includes master message data 602 comprising user messages. Management server 802 further includes master personal data 603 comprising user IDs, passwords and other personal information
The allocation of master data onto distributed remote servers may vary according to the requirements of a particular application. For example, a large business with many employees may want to dedicate remote servers to store only one type of data, such as the master time record data 601, master message data 602, or master personal data 603. Alternatively, a relatively small business with few employees, may find that all the master data may be stored on a single remote server. Furthermore, such a business may not need a remote server at all, if all the master data and local data can be stored in the MFP 100.

### (c) Synchronization

As previously described herein, MFPs configured in accordance with an embodiment of the invention may operate in stand-alone mode, or communicatively coupled to one or more remote servers via a communications link in a network application. When operating in stand-alone mode, an MFP performs the various functions described herein, such as user verification and message retrieval, based upon the local data maintained by the MFP. When operating in a network application, the most recent master data may be maintained on a remote server, e.g., managed by a central application. It is therefore desirable to have the local data maintained by MFPs synchronized with master data on remote servers on a regular basis to ensure data consistency.
According to one embodiment of the invention, MFP 100 initiates a synchronization request to remote server 501. If remote server 501 is available, then remote server 501 responds by authorizing MFP 100 to transmit the entries in the local data. Once the remote server 501 receives the local data, the system 604 checks each entry in the local data and compares it with the entries in the master data. If an entry in the local data is not present in the master data then that entry is stored in the master data. Once that is done, the entry is deleted from the local data. Alternatively, if an entry in the local data is already present in the master data, then that entry is simply deleted from the local data.
Additionally, it may be possible for the most recent data to be maintained on the remote server 501, instead of MFP 100. In such a case, the remote server 501 transmits the master data, stored on the master storage device 600, to MFP 100. Once MFP 100 receives the master data, MFP 100 checks each entry in the master data and compares it with the entries in the local data. If an entry in the master data is not present in the local data, then that entry is stored in the local data.
During the synchronization process it may be possible to have remote server 501 transmit master message data 603 to MFP 100. Because there is no way of predicting which MFP 100 an employee may log onto next, remote server 501 may upload the master message data 603 to all the MFPs. In which case, each MFP 100 may store the master message data 603 in storage device 102 as message data 104. This ensures that the master message data 603 is available to an employee, even if the communications link 500 or remote server 501 is down or unavailable.
According to another embodiment of the invention, remote server 501 initiates synchronization over communications link 500. An advantage of doing this over the previous embodiment is that it eliminates the possibility of multiple MFPs simultaneously initiating a synchronization request to the remote server 501. Under this embodiment of the invention, the remote server 501 transmits a request to an MFP 100 for the local data. The MFP 100 then responds by transmitting the local data to the remote server 501. The local data is then compared with the master data. Once synchronization between the remote server 501 and the MFP 100 is completed, the remote server 501 then initiates another synchronization process with another MFP 100. This is repeated until all MFPs have been synchronized with the remote server 501.

### IV. Other Applications

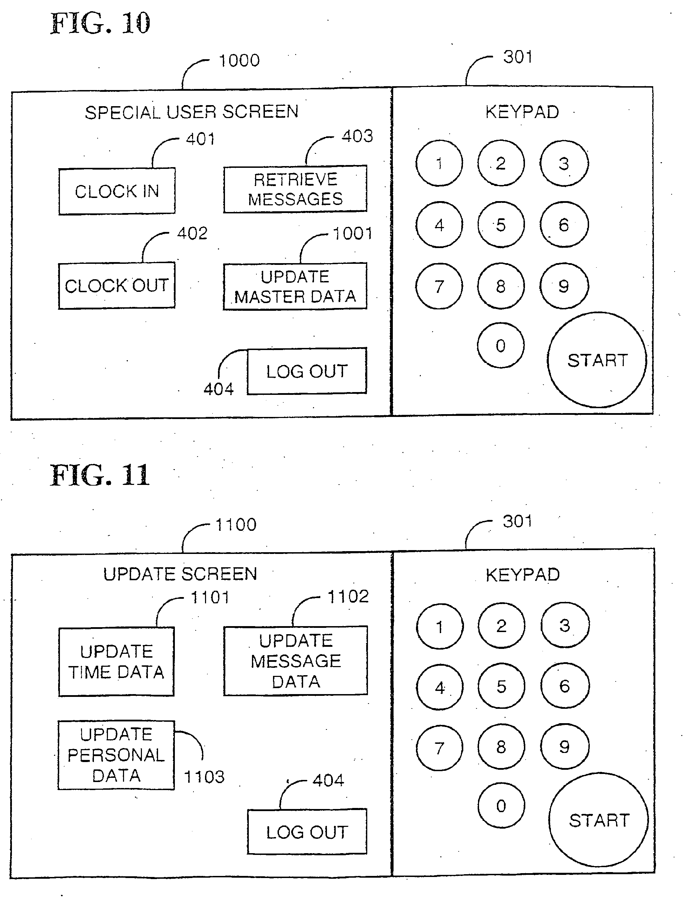

According to another embodiment of the invention, MFP 100 is further configured to distinguish between different types of users. For example, MFP 100 is configured to distinguish between a user who is a regular employee with basic user privileges and an employee who is a special employee with additional special user privileges. A user with special user privileges, such as a manager for instance, may be able to perform certain functions on the MFP 100 that cannot be performed by other types of users. Example functions include updating a master time record data 601, a master message data 602 and a master personal data 603.
For example, suppose that an employee with special user privileges logs onto MFP 100 in the manner as described herein. MFP 100 proceeds to a special state, where MFP 100 checks either the personal data 105 or the master personal data 603 to determine whether the employee attempting to log on the MFP 100 has special user privileges. Once MFP 100 or remote server 501 determines that the employee has special user privileges, then MFP 100 proceeds to special user option state 900, where the employee is presented with a special user screen 1000 as depicted on FIG. 10. The special user screen 1000 may be similar to the user screen 400 except that it may contain additional options. These additional options may include, without limitation, synchronizing, updating and/or modifying the local data and the master data. The aforementioned options are described in more detail hereinafter.

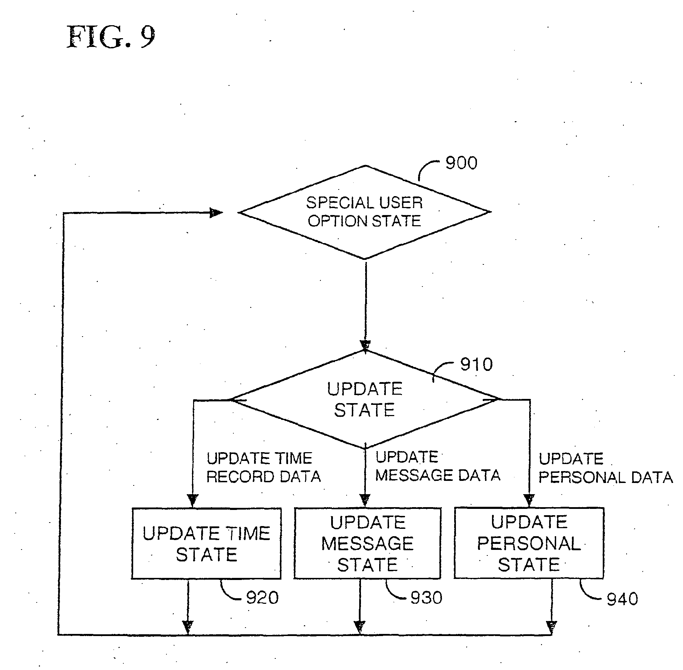

FIG. 9 is a flow diagram depicting the operation of MFP 100 in the context of performing process to update both the master and local data. The update process is similar to the synchronization process described above. After an employee with special user privileges logs onto MFP 100, from special user option Slate 900, MFP 100 displays special user screen 1000. Special user screen 1000 includes a user interface object 1001 for updating master data. From special user screen 1000, the employee may inhale the update master data option by selecting user interface object 1001. Update screen 1100 as depicted in FIG. 11, includes a user interface object 1101 for updating the time record data 103 and master time record data 601. Update screen 1100 also includes a user interface object 1102 for updating the message data 104 and master message data 602. Update screen 1100 further includes a user interface object 1103 for updating the personal data 105 and master personal data 603. Update screen 1100 may include other user interface objects. After selecting user interface 1001, MFP 100 now proceeds to update state 910, where the employee is presented with update screen 1100. After displaying update screen 1100, MTP 100 waits for employee to make a selection.
If from update state 910, the employee selects user interface object 1101, then MFP 100 proceeds to update time state 920 and communicates with a payroll server 800. MFP 100 then transmits the time record data 103 to the payroll server 800. The payroll server 800 identifies each entry in the time record data 103. Each entry is then compared with the entries in the master time record data 601 to determine whether there is match. If no match is found in the master time record data 601, then that entry is stored in the master time record data 601. Once the entry has been stored on the master time record data 601, the entry is deleted from the time record data 103. Alternatively, if an exact entry in the time date 103 is already present in the master time record data 601, that entry is simply deleted from the time record data 103 of MFP 100. The above process is then repeated for all entries in the time record data 103. Once all entries have been compared, MFP 100 proceeds to option state 900 and waits for employee to, make another selection.

In some instances, it may also be possible that the most recent data is located on the remote server 501, instead of MFP 100. In such a case, the remote server 501transmits the master time record data 601 to MFP 100. Once MFP 100 receives the master time record data 601, MFP 100 checks each entry in the master time record data 601 and compares it with the entries in the time record data 103. If an entry in the master time record data 601 is not present in the time record data 103, then that entry is stored in the time record data 103. If, however, the entry in the master time record data 601 is already present in time record data 103, then MFP 100 proceeds to the next entry in the master time record data 601.
The update process for message data 104 and personal data 105 is similar to that of updating the time record data 103. If the employee selects user interface object 1102, then MFP 100 proceeds to update message state 930 and communicates with management, server 802, instead of payroll server 800. Similarly, if the employee selects user interface object 1103, then MFP 100 proceeds to update personal state and communicates with management server 802.
In FIG. 9, the invention has been described with reference to specific embodiments thereof. It will, however, be evident that various modifications and changes may be made thereto without departing from the broader spirit and scope of the invention. For example, the steps may be performed in a different order than depicted in FIG. 9. Another example, some of the steps may not be performed, or additional steps may be performed. The flow chart is, accordingly, to be regarded in an illustrative rather than a restrictive sense.
In another embodiment of the invention, the MFP 100 may perform other applications as well. For instance, if the MFP 100 is equipped with printing capabilities, it may be possible for an employee to print various things. For example, it may be possible for the employee to print his/her work schedule, his messages and his personal information. Furthermore, if MFP 100 has a scanning feature, it may be possible to have an employee use an ID card to log onto MFP 100 instead of entering an ID and password. In yet another embodiment of the invention, it may be possible for an employee to send messages from an MFP 100.
MFPs may be configured to perform the functions described herein using hardware, computer software, or any combination of computer hardware and software and the invention is not limited to any particular implementation. For example, the firmware of an MFP may be modified to perform the functions described herein. As another example, additional hardware and/or computer software may be added to an MFP to provide the additional functionality.
In the foregoing specification, the invention has been described with reference to specific embodiments thereof. It will, however, be evident that various modifications and changes may be made thereto without departing from the broader scope of the invention. The specification and drawings are, accordingly, to be regarded in an illustrative rather than a restrictive sense.

## Claims

1. A multi-function peripheral apparatus capable of performing at least two of printing, scanning, facsimile and copying functions, and comprising:
input means (301) for receiving identification data that uniquely identifies a user; **characterised by**:
a first user interface object (401) for allowing said user to select a clock-in option;
a second user interface object (402) for allowing said user to select a clock-out option;
a third user interface object (403) for allowing a user to select a retrieve messages option; and
storage means (102) for storing a time record for said user, said time record comprising: data that uniquely identifies said user data indicative of whether said clock-in or clock-out option was selected and data specifying the time at which said user selected the clock-in or clock-out option, and message data (104);
wherein the first, second and third user interface objects are displayed after receipt and validation of identification data, and the third user interface object is separate from the first and second user interface objects;
wherein on selection of the clock-in or clock-out options the apparatus updates the time record for that user and returns to a user state, in which it awaits user input; and
wherein on selection of the retrieve messages option the apparatus retrieves from the storage means (102) any messages associated with said user and displays them on a input/output device (101).

2. An apparatus according to Claim 1, wherein the user identification data includes a user ID and a password.

3. An apparatus according to Claim 2, further comprising mean for verifying the user ID and password.

4. An apparatus according to Claim 2, the apparatus further comprising means for providing the user ID and the password to a remote server over a communications link.

5. An apparatus any one of the preceding Claims, wherein the time record data specifies a time at which the user identification data was received.

6. An apparatus according to any one of the preceding Claims, further comprising means for providing the time record data to a remote server (800) over a communications link (500).

7. An apparatus according to anyone of the preceding Claims, further comprising means for requesting message data for the user from a remote server (802) over a communications link (500).

8. An apparatus according to any one of the preceding Claims, further comprising means for providing employee data for the user.

9. An apparatus according to any one of the preceding Claims, further comprising means for determining, based upon the user identification data, whether the user has basic user privileges or basic and special user privileges, and a fourth user interface object (1001) that is displayed if the user has special user privileges and wherein, on selection of the fourth user interface object, the apparatus performs one or more of the following functions: synchronising, updating and modifying local or master data.

10. An apparatus according to any one of the preceding Claims, further comprising means for determining, based upon the user identification data, a mode of operation for the multi-function peripheral apparatus.

11. An apparatus according to any one of the preceding Claims, further comprising means for synchronizing the time record data with master time record data located on a remote server (800) over a communications link (500).

12. An apparatus according to any one of the preceding Claims that is a printer.

13. An apparatus according to any one of Claims 1 to 12 that is a copier.

14. A computer program comprising program code means that, when executed on a multi-function peripheral apparatus capable of performing at least two of printing, scanning, facsimile and copying functions, a printer or a copier, instructs the peripheral apparatus, printer or copier to perform the steps of:
receiving user identification data that uniquely identifies a user;
after receipt and validation of user identification data:
providing a first user interface object (401) to allow a user to select a clock-in option;
providing a second user interface object (402) to allow a user to select a clock-out option;
providing a third user interface object (403), separate from the first and second user interface objects, to allow a user to select a retrieve messages option;
storing a time record for said user, said time record comprising: data that uniquely identify said user, data indicative of whether said clock-in or clock-out option was selected and data specifying the time at which said user selected the clock-in or clock-out option; and
storing message data (104) wherein:
on selection of one of said clock-in or clock-out options by a user said program instructs the multifunction peripheral apparatus, printer or copier to update the time record for that user and to return to a user state, in which it awaits user input; and
on selection of the retrieve messages option the program instructs the apparatus to retrieve any messages associated with said user and to display them on an input/output device (101).

## Patentansprüche

1. Multifunktions-Peripheriegerät, imstande, wenigstens Zweierlei aus dem Folgenden auszuführen: Druck-, Scan-, Fax- und Kopierfunktionen, und Folgendes umfasst:
Eingabemittel (301) zum Empfangen von Identifikationsdaten, die einen Anwender eindeutig identifizieren; **gekennzeichnet durch**:
ein erstes Anwenderschnittstellenobjekt (401), um es dem Anwender zu ermöglichen, eine Eincheck-Option auszuwählen;
ein zweites Anwenderschnittstellenobjekt (402), um es dem Anwender zu ermöglichen, eine Auscheck-Option auszuwählen;
ein drittes Anwenderschnittstellenobjekt (403), um es dem Anwender zu ermöglichen, eine Abfrage-Nachrichten-Option auszuwählen; und
Speichermittel (102) zum Speichern einer Zeit-Aufzeichnung für den Anwender, wobei die Zeit-Aufzeichnung Folgendes umfasst: Daten, die die Anwenderdaten eindeutig identifizieren, hinweisend darauf, ob die Eincheck- oder Auscheck-Option gewählt wurde, und Daten, die den Zeitpunkt spezifizieren, zu welchem der Anwender eine Eincheck- oder Auscheck-Option wählte, und Nachrichtendaten (104);
wobei das erste, zweite und dritte Anwenderschnittstellenobjekt nach dem Empfang und der Validierung der Identifikationsdaten angezeigt werden und das dritte Anwenderschnittstellenobjekt von dem ersten und zweiten Anwenderschnittstellenobjekt getrennt ist;
wobei das Gerät bei Auswahl der Eincheck- und Auscheck-Optionen die Zeit-Aufzeichnung für den Anwender aktualisiert und zu einem Anwender-Zustand zurückkehrt, in welchem es eine Anwender-Eingabe erwartet; und
wobei das Gerät bei Auswahl der Abfrage-Nachrichten-Option von dem Speichermittel (102) alle Nachrichten abfragt, die mit diesem Anwender verknüpft sind, und sie auf einer Eingabe-/Ausgabe-Vorrichtung (101) anzeigt.

2. Gerät nach Anspruch 1, wobei die Anwender-Identifikationsdaten eine Anwender-ID und ein Passwort beinhalten.

3. Gerät nach Anspruch 2, welches weiter ein Mittel zum Verifizieren der Anwender-ID und des Passworts umfasst.

4. Gerät nach Anspruch 2, wobei das Gerät weiter ein Mittel umfasst, um einem Remote-Server die Anwender-ID und das Passwort über einen Kommunikations-Link bereitzustellen.

5. Gerät nach irgendeinem der vorangegangenen Ansprüche, bei welchem die Zeit-Aufzeichnungsdaten einen Zeitpunkt spezifizieren, zu dem die Anwender-Identifikationsdaten empfangen wurden.

6. Gerät nach irgendeinem der vorangegangenen Ansprüche, das weiter Mittel umfasst, um die Zeit-Aufzeichnungsdaten über einen Kommunikations-Link (500) einem Remote-Server (800) bereitzustellen.

7. Gerät nach irgendeinem der vorangegangenen Ansprüche, das weiter ein Mittel umfasst, um für den Anwender Nachrichtendaten über einen Kommunikations-Link (500) von einem Remote-Server (802) anzufordern.

8. Gerät nach irgendeinem der vorangegangenen Ansprüche, das weiter ein Mittel umfasst, um Mitarbeiterdaten für den Anwender bereitzustellen.

9. Gerät nach irgendeinem der vorangegangenen Ansprüche, das weiter ein Mittel umfasst, um basierend auf den Anwender-Identifikationsdaten zu bestimmen, ob der Anwender grundlegende Anwenderrechte oder grundlegende und spezielle Anwenderrechte hat, und ein viertes Anwenderschnittstellenobjekt (1001), das angezeigt wird, wenn der Anwender spezielle Anwenderrechte hat, und bei welchem nach Auswahl des vierten Anwenderschnittstellenobjekts das Gerät eine oder mehrere der folgenden Funktionen ausführt: Synchronisierung, Aktualisierung und Modifizierung lokaler oder Master-Daten.

10. Gerät nach irgendeinem der vorangegangenen Ansprüche, das weiter ein Mittel umfasst, um basierend auf den Anwender-Identifikationsdaten eine Betriebsart für das Multifunktions-Peripheriegerät zu bestimmen.

11. Gerät nach irgendeinem der vorangegangenen Ansprüche, das weiter ein Mittel umfasst, um über einen Kommunikations-Link (500) die Zeit-Aufzeichnungsdaten mit Master-Zeit-Aufzeichnungsdaten, die sich auf einem Remote-Server (800) befinden, zu synchronisieren.

12. Gerät nach irgendeinem der vorangegangenen Ansprüche, das ein Drucker ist.

13. Gerät nach irgendeinem der Ansprüche 1 bis 12, das ein Kopierer ist.

14. Computer-Programm, das ein Programmcode-Mittel umfasst, das, wenn es auf einem Multifunktions-Peripheriegerät ausgeführt wird, der imstande ist, wenigstens Zweierlei aus dem Folgenden auszuführen: Druck-, Scan-, Fax- und Kopierfunktionen, ein Drucker oder ein Kopierer, das Peripheriegerät anweist folgende Schritte auszuführen:
es werden Anwender-Identifikationsdaten empfangen, die einen Anwender eindeutig identifizieren;
nach Empfang und Validierung der Anwender-Identifikationsdaten:
es wird ein erstes Anwenderschnittstellenobjekt (401) bereitgestellt, um es dem Anwender zu ermöglichen, eine Eincheck-Option auszuwählen;
es wird ein zweites Anwenderschnittstellenobjekt (402) bereitgestellt, um es dem Anwender zu ermöglichen, eine Auscheck-Option auszuwählen;
es wird ein drittes Anwenderschnittstellenobjekt (403) bereitgestellt, das von dem ersten und zweiten Anwenderschnittstellenobjekt getrennt ist, um es dem Anwender zu ermöglichen, eine Abfrage-Nachrichten-Option auszuwählen;
es wird eine Zeit-Aufzeichnung für den Anwender gespeichert, wobei die Zeit-Aufzeichnung Folgendes umfasst: Daten, die den Anwender eindeutig identifizieren, Daten, die hinweisend darauf sind, ob die Eincheck- oder Auscheck-Option gewählt wurde, und Daten, die den Zeitpunkt spezifizieren, zu welchem der Anwender eine Eincheck- oder Auscheck-Option wählte, und
es werden Nachrichtendaten (104) gespeichert, für welche Folgendes gilt:
bei bzw. nach Auswahl einer der beiden aus der Eincheck- oder Auscheck-Optionen durch einen Anwender weist das Programm das Multifunktions-Peripheriegerät, den Drucker oder den Kopierer an, die Zeitaufzeichnung für diesen Anwender zu aktualisieren und in einen Anwender-Zustand zurückzukehren, in welchem es eine Anwender-Eingabe erwartet; und
bei bzw. nach Auswahl der Abfrage-Nachrichten-Option das Programm das Gerät anweist, alle Nachrichten, die mit diesem Anwender zusammenhängen, abzufragen und sie auf einer Eingabe-/Ausgabe-Vorrichtung (101) anzuzeigen.

## Revendications

1. Appareil périphérique multifonctions capable d'effectuer au moins deux de fonctions d'impression, de numérisation, de télécopie et de photocopie, et comprenant :
un moyen d'entrée (301) destiné à recevoir des données d'identification qui identifient de manière unique un utilisateur ; **caractérisé par** :
un premier objet d'interface utilisateur (401) destiné à permettre audit utilisateur de sélectionner une option de pointage d'heure de début ;
un second objet d'interface utilisateur (402) destiné à permettre audit utilisateur de sélectionner une option de pointage d'heure de fin ;
un troisième objet d'interface utilisateur (403) destiné à permettre à un utilisateur de sélectionner une option de recherche de messages ; et
un moyen de stockage (102) destiné à stocker un enregistrement de durée pour ledit utilisateur, ledit enregistrement de durée comprenant : des données qui identifient de manière unique lesdites données d'utilisateur indiquant si ladite option de pointage d'heure de début ou ladite option de pointage d'heure de fin a été sélectionnée, et des données spécifiant l'heure à laquelle ledit utilisateur a sélectionné l'option de pointage d'heure de début ou l'option de pointage d'heure de fin, et des données de messages (104) ;
dans lequel le premier, le second et le troisième objets d'interface utilisateur sont affichés après la réception et la validation des données d'identification, et le troisième objet d'interface utilisateur est séparé du premier et du second objets d'interface utilisateur ;
dans lequel, lors de la sélection des options de pointage d'heure de début ou de pointage d'heure de fin, l'appareil met à jour l'enregistrement de durée pour cet utilisateur et repasse à un état utilisateur, dans lequel il attend une entrée utilisateur ; et
dans lequel, lors de la sélection de l'option de recherche de messages, l'appareil recherche dans le moyen de stockage (102) les éventuels messages associés audit utilisateur et les affiche sur un dispositif d'entrée/de sortie (101).

2. Appareil selon la revendication 1, dans lequel les données d'identification d'utilisateur comprennent un ID d'utilisateur et un mot de passe.

3. Appareil selon la revendication 2, comprenant en outre un moyen de vérification de l'ID d'utilisateur et du mot de passe.

4. Appareil selon la revendication 2, l'appareil comprenant en outre un moyen permettant de fournir l'ID d'utilisateur et le mot de passe à un serveur distant sur une liaison de communication.

5. Appareil selon l'une quelconque des revendications précédentes, dans lequel les données de l'enregistrement de durée spécifient une heure à laquelle les données d'identification d'utilisateur ont été reçues.

6. Appareil selon l'une quelconque des revendications précédentes, comprenant en outre un moyen permettant de fournir les données de l'enregistrement de durée à un serveur distant (800) sur une liaison de communication (500).

7. Appareil selon l'une quelconque des revendications précédentes, comprenant en outre un moyen permettant de demander des données de messages pour l'utilisateur auprès d'un serveur distant (802) sur une liaison de communication (500).

8. Appareil selon l'une quelconque des revendications précédentes, comprenant en outre un moyen permettant de fournir des données d'employé pour l'utilisateur.

9. Appareil selon l'une quelconque des revendications précédentes, comprenant en outre un moyen permettant de déterminer, sur la base des données d'identification d'utilisateur, si l'utilisateur dispose de privilèges d'utilisateur basiques ou de privilèges d'utilisateur basiques et particuliers, et un quatrième objet d'interface utilisateur (1001) qui est affiché si l'utilisateur dispose de privilèges d'utilisateur particuliers, et dans lequel, lors de la sélection du quatrième objet d'interface utilisateur, l'appareil effectue une ou plusieurs des fonctions suivantes : une synchronisation, une mise à jour et une modification de données locales ou permanentes.

10. Appareil selon l'une quelconque des revendications précédentes, comprenant en outre un moyen permettant de déterminer, sur la base des données d'identification d'utilisateur, un mode de fonctionnement de l'appareil périphérique multifonctions.

11. Appareil selon l'une quelconque des revendications précédentes, comprenant en outre un moyen de synchronisation des données de l'enregistrement de durée avec les données d'un enregistrement de données permanent situées sur un serveur distant (800) sur une liaison de communication (500).

12. Appareil selon l'une quelconque des revendications précédentes, qui est une imprimante.

13. Appareil selon l'une quelconque des revendications 1 à 12, qui est une photocopieuse.

14. Programme informatique comprenant un moyen de code de programme qui, lorsqu'il est exécuté sur un appareil périphérique multifonctions capable d'effectuer au moins deux de fonctions d'impression, de numérisation, de télécopie et de photocopie, une imprimante ou une photocopieuse, demande à l'appareil périphérique, à l'imprimante ou à la photocopieuse d'effectuer les étapes consistant à :
recevoir des données d'identification d'utilisateur qui identifient de manière unique un utilisateur ;
après la réception et la validation des données d'identification d'utilisateur :
prévoir un premier objet d'interface utilisateur (401) destiné à permettre à un utilisateur de sélectionner une option de pointage d'heure de début ;
prévoir un second objet d'interface utilisateur (402) destiné à permettre à un utilisateur de sélectionner une option de pointage d'heure de fin ;
prévoir un troisième objet d'interface utilisateur (403), séparé du premier et du second objets d'interface utilisateur, destiné à permettre à un utilisateur de sélectionner une option de recherche de messages ;
stocker un enregistrement de durée pour ledit utilisateur, ledit enregistrement de durée comprenant : des données qui identifient de manière unique ledit utilisateur, des données indiquant si ladite option de pointage d'heure de début ou ladite option de pointage d'heure de fin a été sélectionnée, et des données spécifiant l'heure à laquelle ledit utilisateur a sélectionné l'option de pointage d'heure de début ou l'option de pointage d'heure de fin ; et
stocker des données de messages (104) à l'intérieur ;
lors de la sélection de l'une desdites options de pointage d'heure de début ou de pointage d'heure de fin par un utilisateur, ledit programme demande à l'appareil périphérique multifonctions, à l'imprimante ou à la photocopieuse de mettre à jour l'enregistrement de durée pour cet utilisateur et de repasser à un état utilisateur, dans lequel il attend une entrée utilisateur ; et
lors de la sélection de l'option de recherche de messages, le programme demande à l'appareil de rechercher les éventuels messages associés audit utilisateur et les afficher sur un dispositif d'entrée/de sortie (101).
